# EUROPEAN PATENT SPECIFICATION

(11) **EP 3 139 619 B1**
(45) Date of publication and mention of the grant of the patent: **26.08.2020**
(21) Application number: 15785875.4
(22) Date of filing: 10.04.2015
(51) Int. Cl.: H04N 21/6543, H04N 21/81, H04N 21/6332, H04N 21/4782, H04N 21/462, H04N 21/443, H04N 21/4363, H04N 21/436, H04N 21/435, H04N 21/434, H04N 21/433, H04N 21/236, H04N 21/235, H04H 60/80, H04H 60/13, H04H 20/16

(54) **BROADCAST RECEIVER, BROADCAST RECEPTION METHOD, INFORMATION PROCESSING APPARATUS, INFORMATION PROCESSING METHOD, BROADCAST APPARATUS, AND BROADCAST METHOD**
RUNDFUNKEMPFÄNGER, RUNDFUNKEMPFANGSVERFAHREN, INFORMATIONSVERARBEITUNGSVORRICHTUNG UND VERFAHREN, INFORMATIONSVERARBEITUNGSVERFAHREN, RUNDFUNKVORRICHTUNG UND RUNDFUNKVERFAHREN
RÉCEPTEUR DE RADIODIFFUSION, PROCÉDÉ DE RÉCEPTION DE RADIODIFFUSION, APPAREIL DE TRAITEMENT D'INFORMATIONS, PROCÉDÉ DE TRAITEMENT D'INFORMATIONS, APPAREIL DE RADIODIFFUSION ET PROCÉDÉ DE RADIODIFFUSION

(30) Priority: 30.04.2014 JP 2014094278
(43) Date of publication of application: 08.03.2017
(73) Proprietor: Sony Corporation, Tokyo 108-0075 (JP)
(72) Inventor: KITAZATO, Naohisa, Tokyo 108-0075 (JP)
(74) Representative: Witte, Weller & Partner Patentanwälte mbB
(86) International application number: PCT/JP2015/002023
(87) International publication number: WO 2015/166635

(56) References cited:
- WO-A1-2013/031556
- WO-A1-2014/050733
- JP-A- 2002 208 899
- JP-A- 2013 098 859
- JP-A- 2013 118 614
- JP-A- 2013 118 614
- JP-A- 2013 225 897
- US-A1- 2003 093 476

## Description

### Technical Field

The present technology relates to a broadcast receiver and a broadcast receiving method for receiving a terrestrial digital television broadcast, to an information processing apparatus and an information processing method for receiving and processing broadcast content from the broadcast receiver, and to a broadcasting apparatus and a broadcasting method for broadcasting the broadcast content.

### Background Art

A mechanism in which, corresponding to a broadcast program received by a broadcast receiver such as a TV receiver, an application of an information processing apparatus such as a smartphone and a tablet terminal is operated in conjunction with the broadcast program is attracting attention. For example, a sports program is received by a TV receiver and at the same time information relating to players shown in that sports program is presented by an information processing apparatus. Thus, the user can enjoy the program while utilizing the information processing apparatus as a second screen.

Patent Document 1 has disclosed a system 1 in which a program guide (EPG), a guide corresponding to a program currently broadcasted in a channel currently selected, and the like as examples of information relating to programs are displayed on a tablet computer. In this system 1, by acquiring detailed information relating to a program currently displayed on a video apparatus from a metadata server, the tablet computer is configured to display the information.

Patent Document 1: Japanese Patent Application Laid-open No. 2013-225897 (paragraph 0024) WO 2013/031556 A1 relates to a receiver and reception method. The receiver includes: a terminal-side server unit configured to receive a request output by a device executing an application; a receiver-side server unit configured to receive a request output by an application execution unit executing an application; a connecting unit configured to establish connection among the terminal-side server unit or the receiver side-server unit, the application execution unit, and the terminal; and a bridge unit configured to bridge-connect the terminal-side server unit and the receiver-side server unit via the connection established by the connecting unit.

JP 2013 118614 A discloses a receiver, a program and a broadcasting system. The receiver, program and broadcasting system enable detailed information about video content currently in broadcast to be input into the peripheral device of a receiver.

### Summary of Invention

### Problem to be solved by the Invention

Currently, a model in which an application in a broadcast receiver is operated in conjunction with broadcasting and various types of content data acquired from broadcasting is transmitted to an application of an information processing apparatus such as a smartphone and a tablet terminal is being considered. However, there are many problems to be solved for realizing such a model.

In view of the above-mentioned circumstances, it is an object of the present technology to provide a broadcast receiver, a broadcast receiving method, an information processing apparatus, an information processing method, a broadcasting apparatus, and a broadcasting method, by which content data acquired from broadcasting can be favorably transmitted from a broadcast receiver to an information processing apparatus connected thereto.

### Means for solving the Problem

In order to solve the above-mentioned problems, a broadcast receiver as an embodiment according to the present technology includes: an interface connectable to an information processing apparatus; and a first controller configured to acquire content data transmitted using a download data block, DDB, message and acquire a first command for causing the information processing apparatus connected through the interface to acquire the acquired content data, and to transfer the first command to the information processing apparatus, the first command being transmitted using an event message.

The above-mentioned broadcast receiver further includes a storage configured to store the acquired content data, in which the first controller is configured to send the content data stored in the storage to the information processing apparatus in response to an acquisition request from the connected information processing apparatus.

The first controller may be configured to set, when the first controller acquires a second command transmitted using the event message, a content data stand-by operation mode on which the first controller generates the first command and transfers the first command to the information processing apparatus every time the first controller acquires the content data transmitted using the DDB message.

The first controller may be configured to cancel the set content data stand-by operation mode when the first controller acquires a third command transmitted using the event message while the content data stand-by operation mode is set.

The first controller may be configured to transfer, when the first controller acquires a fourth command for transmitting a message to the information processing apparatus, the fourth command to the information processing apparatus, the fourth command being transmitted using the event message.

The first controller may be configured to transfer, when the first controller acquires a fifth command to instruct the information processing apparatus to access data on a network, the fifth command to the information processing apparatus, the fifth command being transmitted using the event message.

In the above-mentioned broadcast receiver, the first command may include information relating to a method of specifying a point of time at which the controller transfers the first command to the information processing apparatus, and the first controller may be configured to determine a point of time at which the first controller transfers the first command on the basis of the information.

A broadcast receiving method as another embodiment according to the present technology includes: by a first controller, acquiring content data transmitted using a DDB message; and acquiring a first command for causing an information processing apparatus connected through the interface to acquire the acquired content data and transferring the first command to the information processing apparatus, the first command being transmitted using an event message.

An information processing apparatus as another embodiment according to the present technology includes: an interface connectable to a broadcast receiver that acquires content data transmitted using a DDB message and acquires a first command for causing an information processing apparatus to acquire the acquired content data and transfers the first command to the information processing apparatus, the first command being transmitted using an event message; and a second controller that acquires, according to the first command transferred from the broadcast receiver, the content data acquired by the broadcast receiver, through the interface.

The second controller may be configured to activate, according to the first command transferred from the broadcast receiver, an application capable of processing the acquired content data.

An information processing method as another embodiment according to the present technology includes: by a second controller, acquiring, from a broadcast receiver that is connected through an interface, acquires content data transmitted using a DDB message, and acquires a first command for causing an information processing apparatus to acquire the acquired content data and transfers the first command to the information processing apparatus, the first command, the first command being transmitted using an event message; and acquiring, according to the first command, the content data acquired by the broadcast receiver, through the interface.

A broadcasting apparatus as another embodiment according to the present technology includes: a data broadcasting unit that transmits content data using a DDB message and transmits a first command for causing an information processing apparatus connected to a broadcast receiver through an interface to acquire the content data, using an event message.

A broadcasting method as another embodiment according to the present technology includes: by a data broadcasting unit, transmitting content data using a DDB message; and transmitting a first command for causing an information processing apparatus connected to a broadcast receiver through an interface to acquire the content data, using an event message.

### Effects of the Invention

As described above, in accordance with the present technology, it is possible to favorably transmit content data acquired from broadcasting, from a broadcast receiver to an information processing apparatus connected thereto.

### Brief Description of Drawings

[Fig. 1] A diagram showing an entire configuration of a system 1 as a first embodiment according to the present technology.
[Fig. 2] A diagram showing a configuration regarding exchange of content data and a command among a broadcast station 10, a broadcast receiver 20, and an external apparatus 30 in the system 1 of Fig. 1.
[Fig. 3] A diagram showing a hardware configuration of the broadcast receiver 20 in the system of Fig. 1.
[Fig. 4] A diagram showing a hardware configuration of the external apparatus 30 in the system of Fig. 1.
[Fig. 5] A diagram explaining an operation using Receive & Launch App (first command).
[Fig. 6] A diagram explaining an operation using Set Receive & Launch App (second command) and Reset Receive & Launch App (third command).
[Fig. 7] A diagram explaining an operation using Receive & Store Content (first command).
[Fig. 8] A diagram explaining an operation using Set Receive & Store Content (second command) and Reset Receive & Store Content (third command).
[Fig. 9] A diagram explaining an operation using Send Message (fourth command).
[Fig. 10] A diagram explaining an operation using Launch App (fifth command).
[Fig. 11] A diagram showing a data structure of DII.
[Fig. 12] A diagram showing a data structure of a content descriptor.
[Fig. 13] A diagram showing a structure of InfoDescriptor.
[Fig. 14] A diagram showing a data structure of a DSM-CC section for transmitting a stream descriptor.
[Fig. 15] A diagram showing a data structure of a general-purpose event message descriptor.
[Fig. 16] A diagram showing a format example of a command to be stored in private_data_byte.
[Fig. 17] A diagram showing a relationship among a command code, a command, and an argument.
[Fig. 18] A diagram showing a description example of content description information according to JSON. Mode(s) for Carrying Out the Invention

Hereinafter, an embodiment according to the present technology will be described with reference to the drawings.

### <First Embodiment>

### [Overall Configuration of System 1]

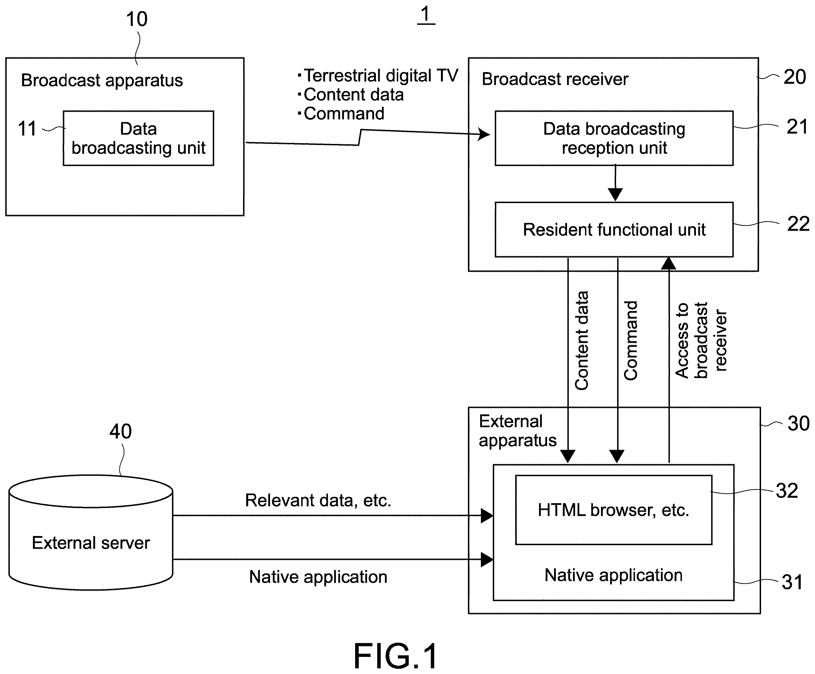

Fig. 1 is a diagram showing an entire configuration of a system 1 as a first embodiment according to the present technology.

This system 1 includes a broadcast station (broadcasting apparatus) 10, a broadcast receiver 20, an external apparatus (information processing apparatus) 30, and an external server 40.

The broadcast station 10 performs carousel transmission in terrestrial digital television broadcasting and data broadcasting. In this technique, transmission of content data and a command transmitted from the broadcast receiver 20 to the external apparatus 30 is assumed as a target of the carousel transmission. That is, the broadcast station 10 includes a data broadcasting unit 11. The data broadcasting unit 11 transmits content data using a DDB message and a command using an event message. The command is for operating the broadcast receiver 20 and the external apparatus 30 to transmit this content data from the broadcast receiver 20 to the external apparatus 30 through an interface, or for operating the external apparatus 30 such that the external apparatus 30 acquires the content data from the broadcast receiver 20. Application data of an HTML5 document, music data, image (moving image) data, message data, and game data, for example, is assumed as the content data transmitted using the DDB message of the data carousel from the data broadcasting unit 11 of the broadcast station 10.

The broadcast receiver 20 includes a data broadcasting reception unit 21 and a resident functional unit 22. The data broadcasting reception unit 21 receives the terrestrial digital television broadcast and the data broadcast service. The resident functional unit 22 is an application that performs data transmission to/from and communication with a native application 31 of the external apparatus 30. The resident functional unit 22 transmits, for example, the content data and the command acquired from the data carousel at the data broadcasting reception unit 21 to the native application 31 being executed in the external apparatus 30 connected to the broadcast receiver 20. The broadcast receiver 20 is, for example, a television apparatus or a set top box and the specific product form thereof is not limited.

Wireless communication such as WiFi (registered trademark) is used for connection between the broadcast receiver 20 and the external apparatus 30. Note that connection between the broadcast receiver 20 and the external apparatus 30 is not limited to the wireless connection and may be wired connection.

The external apparatus 30 is, for example, an information processing apparatus such as a smartphone and a tablet terminal. The external apparatus 30 downloads and installs, according to user's instruction, the native application from the external server 40 for the use. The native application 31 installed into the external apparatus 30 communicates with the resident functional unit 22 of the broadcast receiver 20 and exchanges the content data and the command.

Note that the native application 31 refers to an application operated on a platform of the external apparatus 30. The application data of the HTML5 document, the music data, the image (moving image) data, and the message are processed by a function (e.g., application unit such as an HTML browser 32) incorporated in the native application 31.

The external server 40 is a server capable of delivering the native application 31 and various types of data such as data relating to the content data transmitted by broadcasting, in response to a request from the external apparatus 30.

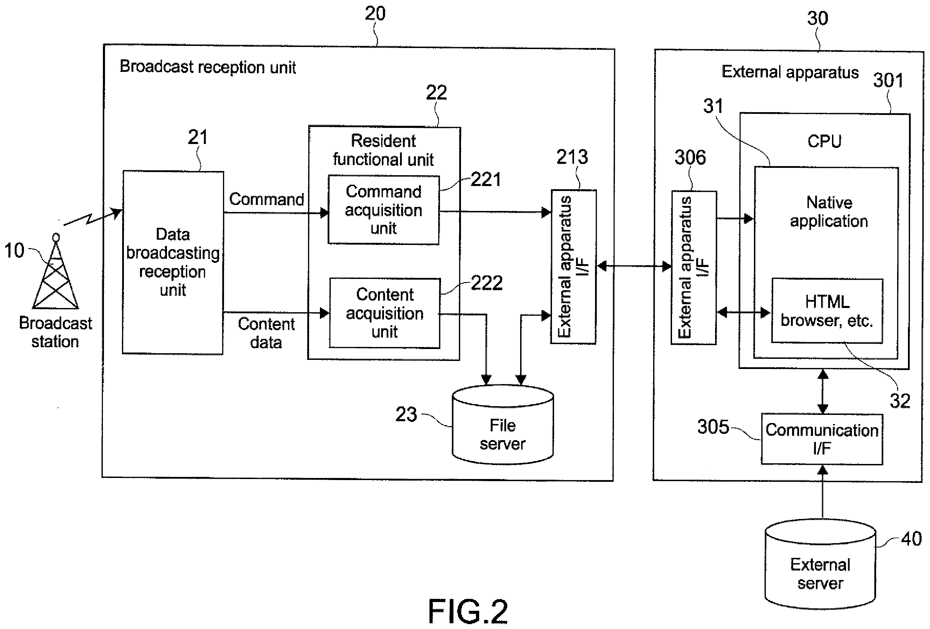

Next, a basic operation in this system 1 will be described with reference to Figs. 1 and 2.

Note that Fig. 2 is a diagram showing a configuration regarding exchange of the content data and the command among the broadcast station 10, the broadcast receiver 20, and the external apparatus 30 in the system 1.
1. First, according to user's instruction, the external apparatus 30 accesses the external server 40 and downloads the native application 31 selected by the user. The external apparatus 30 installs the downloaded native application 31.
   Here, the native application 31 includes various application functions such as the HTML browser 32 capable of processing the application data of the HTML5 document, for example, and an AV player capable of reproducing AV data.
2. When the native application 31 is started, searching for the external apparatus 30 is first started via wireless communication such as WiFi (registered trademark). When the broadcast receiver 20 is found by the native application 31, the user selects that broadcast receiver 20 as a connection destination. In response to the selection from the user, the native application 31 requests a connection from the broadcast receiver 20.
3. The resident functional unit 22 of the broadcast receiver 20 authenticates the native application 31 that has requested the connection. The resident functional unit 22 determines that that native application 31 is authentic (should be allowed to connect to the resident functional unit 22 itself), and allows the connection with that native application 31. This provides a connection state in which the native application 31 of the external apparatus 30 and the resident functional unit 22 of the broadcast receiver 20 can communicate with each other.
4. The data broadcasting reception unit 21 of the broadcast receiver 20 receives the content data and the command transmitted using the data carousel. The content data is transmitted using a DDB (Download Data Block) message of the data carousel and the command is transmitted using the event message of the data carousel. The content data and the command received by the data broadcasting reception unit 21 are given to the resident functional unit 22.
5. As shown in Fig. 2, the resident functional unit 22 of the broadcast receiver 20 includes a command acquisition unit 212 and a content data acquisition unit 222. The command acquisition unit 212 performs processing or the like transferring the command given by the data broadcasting reception unit 21 to the native application 31 operated in the external apparatus 30 through, for example, an external apparatus interface 213. The content data acquisition unit 222 performs processing or the like storing the content data given from the data broadcasting reception unit 21 in a file server 23.
6. The native application 31 of the external apparatus 30 accesses the file server 23 on the basis of the received command and acquires targeted content data from the file server 23. For example, if the content data is the application data of the HTML5 document, the native application 31 of the external apparatus 30 activates the HTML browser incorporated in the native application 31 and passes the application data to the HTML browser. With this, the application data is processed by the HTML browser.
7. Further, the native application 31 of the external apparatus 30 is capable of appropriately requesting acquisition of data such as an electronic program guide delivered by the data broadcasting and giving an instruction to switch the channel, for example, with respect to the resident functional unit 22 of the broadcast receiver 20.

In the above, the basic operation in the system 1 as the first embodiment according to the present technology has been described.

### [Hardware Configuration of Broadcast Receiver 20]

Next, a hardware configuration of the broadcast receiver 20 will be described.

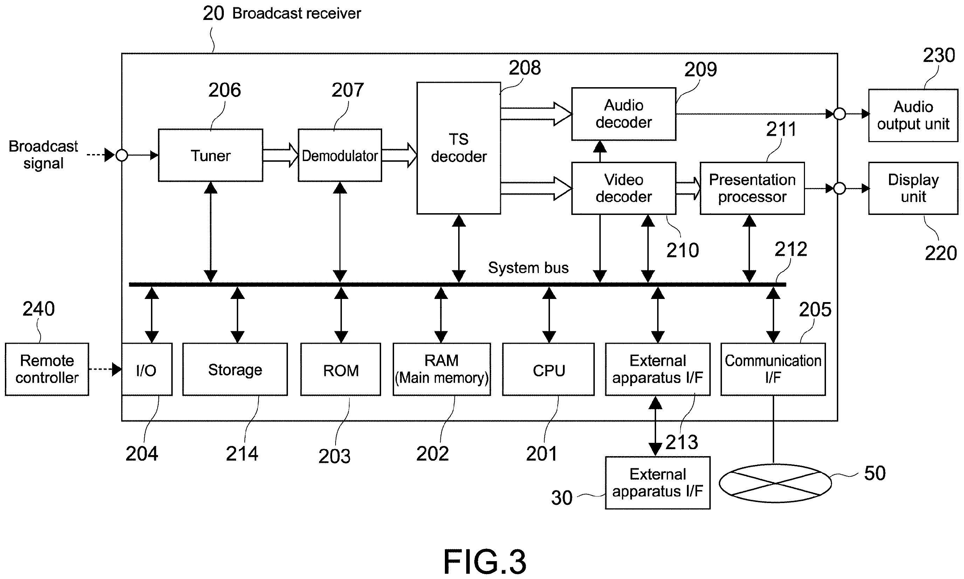

Fig. 3 is a diagram showing a hardware configuration of the broadcast receiver 20.

The broadcast receiver 20 includes a CPU (Central Processing Unit) 201, a RAM (Random Access Memory) 202, a ROM (read only memory) 203, a remote controller I/O 204, a communication interface 205, a tuner 206, a demodulator 207, a TS decoder 208, an audio decoder 209, a video decoder 210, a presentation processor 211, a system bus 212, the external apparatus interface 213, storage 214, and the like. A display unit 220 and an audio output unit 230 are connected to the broadcast receiver 20.

The CPU 201 (first controller) performs an overall control of the broadcast receiver 20, arithmetic processing for executing programs, and the like.

The RAM 202 is a randomly accessible memory for storing various programs and various types of data to be interpreted and executed by the CPU 201.

The ROM 203 is a nonvolatile memory in which various types of data to be used in the broadcast receiver 20, such as a font, are fixedly stored.

The remote controller I/O 204 inputs and outputs infrared ray signals and wireless signals to/from a remote controller 240.

The communication interface 205 performs processing for communication with a network 50 such as the Internet and a local area network.

The tuner 206 receives a terrestrial digital television broadcast and a data broadcast service selected by the user.

The demodulator 207 demodulates the terrestrial digital television broadcast and the data broadcast service received by the tuner 206 and restores a TS (transport stream).

The TS decoder 208 separates the TS into an audio stream, a video stream, a DDB message, a event message, and the like by separating the TS in each elementary stream.

The audio decoder 209 decodes an audio stream separated by the TS decoder 208 and outputs an audio signal to a speaker unit 230 including an amplifier and a speaker.

The video decoder 210 decodes the video stream separated by the TS decoder 208 and supplies it to a presentation processor 211.

Further, the DDB message and the event message separated by the TS decoder 208 are supplied to the CPU 201. The CPU 201 is operated as the data broadcasting reception unit 21 and the resident functional unit 22 shown in Fig. 1. The data broadcasting reception unit 21 extracts modules divided and transmitted in each fixed-length block using the DDB message and supplies them to the resident functional unit 22 as the content data. Further, the CPU 201 acquires the command transmitted using the event message and supplies it to the resident functional unit 22.

The presentation processor 211 synthesizes the video signal from the video decoder 210, graphic images generated by the CPU 201, characters, and the like, generates the data to be presented on the screen of the display unit 220, and outputs it to the display unit 220.

The external apparatus interface 213 (interface) is an interface for connection to the external apparatus 30. The external apparatus interface 213 may employ, for example, wireless connection using WiFi (registered trademark), a wireless LAN (Local Area Network), or the like and may employ wired connection using Ethernet (registered trademark), USB (Universal Serial Bus), and the like.

The storage 214 is a data storage unit for storing the content data and the like acquired from the data broadcast service. The storage 214 only needs to be a nonvolatile storage apparatus such as a flash memory and a hard disk drive.

### [Hardware Configuration of External Apparatus 30]

Next, a hardware configuration of the external apparatus 30 will be described.

The external apparatus 30 is utilized as a secondary monitor of the broadcast receiver 20, and hence may be an information processing apparatus having a portable size.

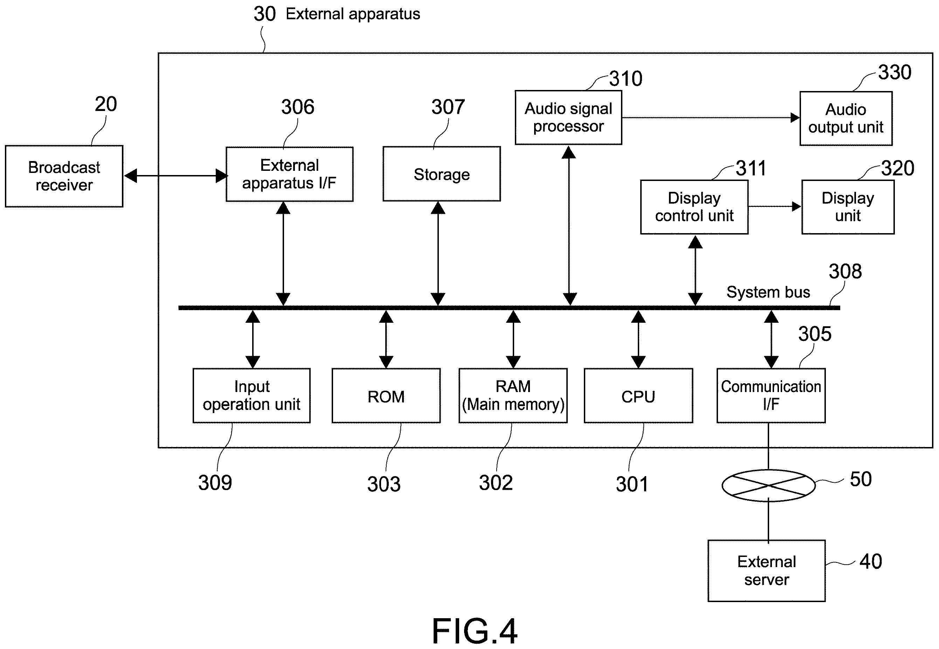

Fig. 4 is a diagram showing a hardware configuration of the external apparatus 30.

The external apparatus 30 is constituted of a CPU 301, a RAM (main memory) 302, a ROM 303, a communication interface 305, an external apparatus interface 306, a storage 307, a system bus 308, an input operation unit 309, an audio signal processor 310, a display control unit 311, a display unit 320, an audio output unit 330, and the like.

The CPU 301 (second controller) performs an overall control of the external apparatus 30, arithmetic processing for executing programs, and the like.

The RAM 302 is a randomly accessible memory for storing various programs and various types of data to be interpreted and executed by the CPU 301.

The ROM 303 is a nonvolatile memory in which various types of data to be used in the external apparatus 30, such as a font, are fixedly stored.

The communication interface 305 performs processing for communication with the network 50 such as the Internet and the local area network.

The external apparatus interface 306 (interface) is an interface for connection to the broadcast receiver 20. The external apparatus interface 213 may employ, for example, wireless connection using WiFi (registered trademark), a wireless LAN (Local Area Network), or the like and may employ wired connection using Ethernet (registered trademark), USB (Universal Serial Bus), and the like.

For example, various types of data such as the content data transmitted by the broadcast receiver 20 and various programs executed by the CPU 301 are stored in the storage 307.

The input operation unit 309 receives various instructions and data inputs from the user. The input operation unit 309 may be configured using a touch sensor panel, for example. Alternatively, the input operation unit 309 may be configured using a mechanical key.

The audio signal processor 310 generates an audio signal from audio data and supplies it to the audio output unit 330 including an amplifier and a speaker.

The display control unit 311 generates a signal for display from the image data and supplies it to the display unit 320 including a display screen.

### [Regarding Command]

Next, commands transmitted using the event message from the broadcast station in this system 1 will be described.

Examples of the commands are as follows:
- Receive & Launch App
- Set Receive & Launch App
- Reset Receive & Launch App
- Receive & Store Content
- Set Receive & Store Content
- Reset Receive & Store Content
- Send Message
- Launch App.

The contents of those commands will be described in the following operation examples.

### [Operation Examples of System 1]

Next, some operation examples using the above-mentioned commands in the system 1 of this embodiment will be described.

### (Operation Using Receive & Launch App)

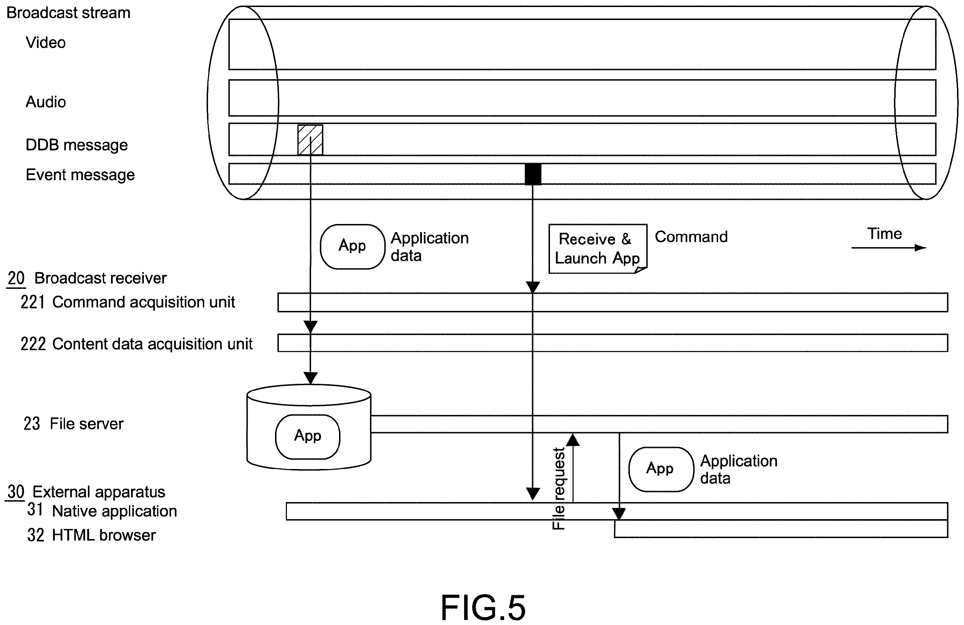

Fig. 5 is a diagram explaining an operation using Receive & Launch App (first command).

Regarding a broadcasting order, the content data is transmitted using the DDB message, and then Receive & Launch App regarding that content data is transmitted using the event message. It is assumed that the content data is application data.

Next, an operation using this Receive & Launch App will be described.

First, the application data (App) transmitted using the DDB message is acquired by the content data acquisition unit 222 in the resident functional unit 22 of the broadcast receiver 20. The content data acquisition unit 222 stores the acquired application data (App) in the file server 23 within the broadcast receiver 20.

After that, Receive & Launch App is transmitted using the event message from the broadcast station 10. A command acquisition unit 221 of the broadcast receiver 20 acquires this Receive & Launch App. Immediately after that, the command acquisition unit 221 transfers this Receive & Launch App to the native application 31 being operated in the CPU 301 of the external apparatus 30, through the external apparatus interface 213.

When the native application 31 of the external apparatus 30 receives Receive & Launch App, the native application 31 executes this command. That is, the native application 31 accesses the file server 23 of the broadcast receiver 20 through the external apparatus interface 306 and acquires a targeted application data from the file server 23.

To describe the operation when this targeted application data is acquired details more, a content ID of that content data is stored in Receive & Launch App as an argument for identifying targeted content data. The native application 31 transmits a file request with this content ID being the argument to the file server 23 of the broadcast receiver 20 through the external apparatus interface 306. In response to this request, the file server 23 of the broadcast receiver 20 sends the targeted application data to the native application 31 of the external apparatus 30. In this manner, the native application 31 of the external apparatus 30 acquires the content data transmitted from the broadcast station 10.

Next, the native application 31 activates Receive & Launch App on the basis of the HTML browser 32 and passes the targeted application data to the HTML browser 32. With this, the application is executed in the HTML browser 32 on the basis of the application data.

As described above, in this operation example, the content data (application data) is transmitted using the DDB message and stored in the file server 23 of the broadcast receiver 20. On the other hand, the command (Receive & Launch App) as a trigger for acquiring and processing the content data stored in the file server 23 by the external apparatus 30 is transmitted using the event message that easily provides time synchronization. Immediately after the broadcast receiver 20 receives it, the broadcast receiver 20 transfers the command (Receive & Launch App) to the native application 31 of the external apparatus 30. The native application 31 of the external apparatus 30 accesses the file server 23 of the broadcast receiver 20 according to this command and acquires the targeted content data, activates a function corresponding to this content data, and starts processing of the content data. Therefore, the processing of the content data in the external apparatus 30 can be started at a timing determined by the broadcast station 10.

### (Operation Using Set Receive & Launch App and Reset Receive & Launch App)

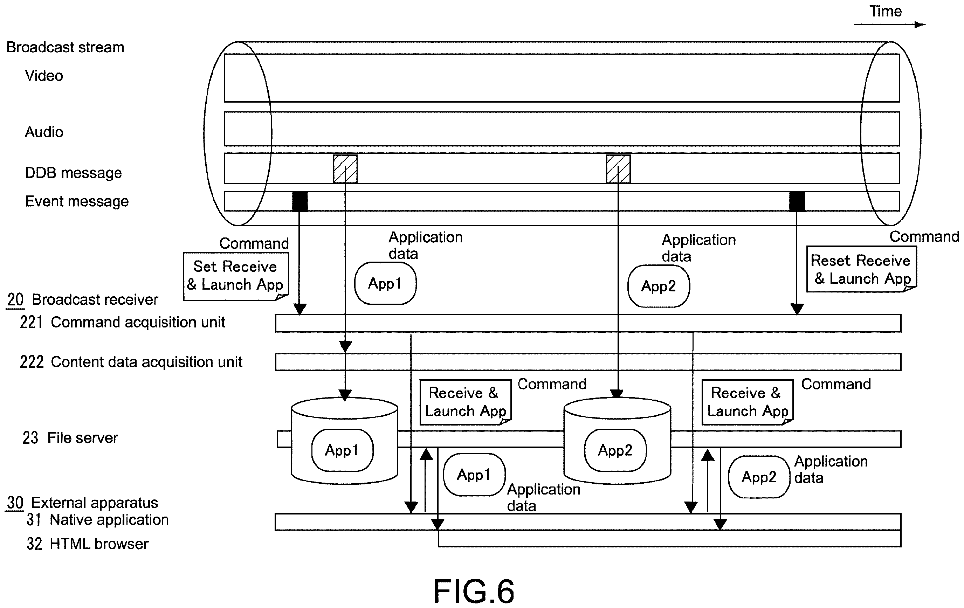

Fig. 6 is a diagram explaining an operation using Set Receive & Launch App (second command) and Reset Receive & Launch App (third command).

Regarding the broadcasting order, Set Receive & Launch App is first transmitted using the event message. After that, the content data is transmitted using the DDB message from the broadcast station 10, one or more times before Reset Receive & Launch App is transmitted using the event message. Also in this operation example, it is assumed that the content data is application.

Next, an operation using those Set Receive & Launch App and Reset Receive & Launch App will be described.

First, Set Receive & Launch App is transmitted using the event message from the broadcast station 10. When the command acquisition unit 221 of the broadcast receiver 20 acquires this Set Receive & Launch App, the following content data stand-by operation mode is held until Reset Receive & Launch App is acquired.

When an application data (Appl) is transmitted using the DDB message from the broadcast station 10, the content data acquisition unit 222 of the broadcast receiver 20 acquires this application data (Appl) and stores the application data (Appl) in the file server 23.

Subsequently, the file server 23 of the broadcast receiver 20 notifies the command acquisition unit 221 of successful storage of the application data (Appl). The command acquisition unit 221, which receives this notification, generates Receive & Launch App and transmits this Receive & Launch App to the native application 31 being operated in the external apparatus 30, through the external apparatus interface.

When the native application 31 of the external apparatus 30 receives Receive & Launch App, the native application 31 executes this Receive & Launch App. That is, the native application 31 accesses the file server 23 of the broadcast receiver 20 through the external apparatus interface 306 and acquires targeted application data (Appl) from the file server 23.

Subsequently, the native application 31 activates the HTML browser 32 and passes the targeted application data (Appl) to the HTML browser 32. With this, the application is executed in the HTML browser 32 on the basis of the application data (Appl).

After that, when subsequent application data (App2) is transmitted using the DDB message, the command acquisition unit 221 of the broadcast receiver 20 acquires it and stores this application data (App2) in the file server 23 as described above. The subsequent operation is the same as in the case of the application data (Appl). That is, the file server 23 notifies the command acquisition unit 221 of successful storage of the application data (App2). The command acquisition unit 221, which receives this notification, generates Receive & Launch App and transmits the native application 31 being operated in the external apparatus 30, through the external apparatus interface 213.

The native application 31 of the external apparatus 30 accesses, according to Receive & Launch App, the file server 23 of the broadcast receiver 20 through the external apparatus interface 306 and acquires targeted application data (App2) from the file server 23.

Next, the native application 31 gives the targeted application data (App2) to the HTML browser 32 on the basis of Receive & Launch App. At this time, if the HTML browser 32 is stopped, the HTML browser 32 is activated and the application data (App2) is given to the activated HTML browser 32. With this, the application is executed in the HTML browser 32 based on the application data (App2).

Reset Receive & Launch App is transmitted using the event message from the broadcast station 10. When the command acquisition unit 221 of the broadcast receiver 20 acquires it, the content data stand-by operation mode is terminated and the operation state before Set Receive & Launch App is acquired, for example, the stand-by operation mode for the command such as Receive & Launch App transmitted using the event message is restored.

In the above-mentioned operation, until the command of Reset Receive & Launch App is received after the broadcast receiver 20 receives the command of Set Receive & Launch App, the resident functional unit 22 of the broadcast receiver 20 is operated on the content data stand-by operation mode as described above. With this, an operation in which the application to be executed in the native application 31 of the external apparatus 30 is switched at a timing at which the content data is transmitted using the DDB message is realized.

Further, in the above-mentioned operation, irrespective of the number of times irrespective of the number of times the content data given to the external apparatus 30 is switched, a total of two commands including Set Receive & Launch App and Reset Receive & Launch App are only necessary as the commands that should be transmitted using the event message from the broadcast station 10. Therefore, the running cost of the command transmission using the event message at the broadcast station 10 is reduced.

### (Operation Using Receive & Store Content)

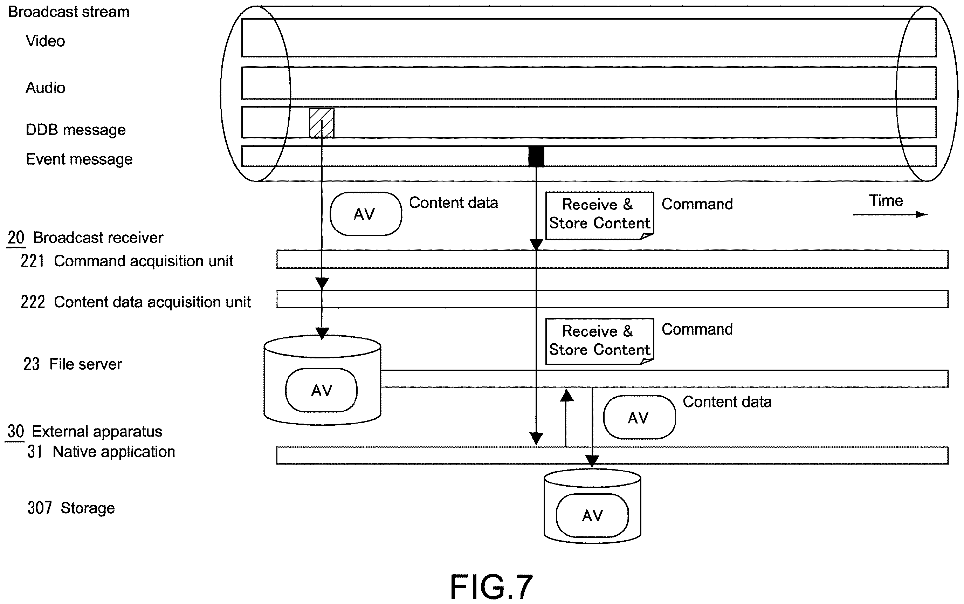

Fig. 7 is a diagram explaining an operation using Receive & Store Content (first command).

Although the case where the application data is transmitted using the DDB message has been described, a case where AV data such as music data and image (moving image) data is transmitted using the DDB message as the content data will be described.

Regarding the broadcasting order, the AV data such as the music data and the image (moving image) data is first transmitted using the DDB message. Subsequently, Receive & Store Content regarding that AV data is transmitted using the event message.

Next, an operation using this Receive & Store Content will be described.

First, the AV data (AV) such as the music data and the image (moving image) data is transmitted using the DDB message from the broadcast station 10. When the content data acquisition unit 222 of the broadcast receiver 20 acquires this AV data (AV), the content data acquisition unit 222 stores this AV data (AV) in the file server 23.

After that, Receive & Store Content is transmitted using the event message from the broadcast station 10. When the command acquisition unit 221 of the broadcast receiver 20 acquires this Receive & Store Content, the command acquisition unit 221 transfers this Receive & Store Content to the native application 31 being operated in the external apparatus 30, through the external apparatus interface 213.

When the native application 31 of the external apparatus 30 acquires Receive & Store Content, the native application 31 executes this command. That is, the native application 31 accesses the file server 23 of the broadcast receiver 20 through the external apparatus interface 306 and acquires targeted AV data (AV) from the file server 23.

The native application 31 stores the acquired content data in the storage 307 of the external apparatus 30. In this manner, the AV data (AV) stored in the storage 307 of the external apparatus 30 is reproduced using an application such as an AV player capable of processing the AV data (AV) at an arbitrary timing specified by the user.

### (Operation Using Set Receive & Store Content and Reset Receive & Store Content)

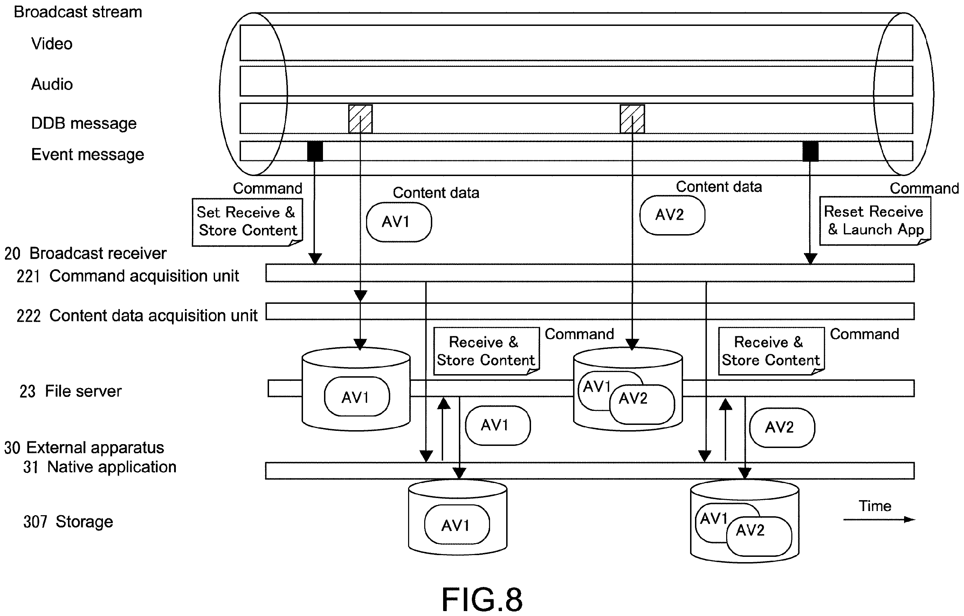

Fig. 8 is a diagram explaining an operation using Set Receive & Store Content (second command) and Reset Receive & Store Content (third command).

Regarding the broadcasting order, Set Receive & Store Content is first transmitted using the event message. After that, AV data (AV1) such as music data and image (moving image) data is transmitted using the DDB message one or more times before Reset Receive & Store Content is transmitted using the event message.

Next, an operation using those Set Receive & Store Content and Reset Receive & Store Content will be described.

First, Set Receive & Store Content is transmitted using the event message from the broadcast station 10. When the command acquisition unit 221 of the broadcast receiver 20 acquires this Set Receive & Store Content, the following content data stand-by operation mode is held until Reset Receive & Store Content is next acquired.

When the AV data (AV1) is transmitted using the DDB message from the broadcast station 10, the command acquisition unit 221 of the broadcast receiver 20 acquires this AV data (AV1) and stores the AV data (AV1) in the file server 23.

Subsequently, the file server 23 of the broadcast receiver 20 notifies the command acquisition unit 221 of successful storage of the AV data (AV1). The command acquisition unit 221, which receives this notification, generates Receive & Store Content and transfers this Receive & Store Content to the native application 31 being operated in the external apparatus 30, through the external apparatus interface 213.

When the native application 31 of the external apparatus 30 acquires Receive & Store Content, the native application 31 accesses the file server 23 of the broadcast receiver 20 through the external apparatus interface 306. The native application 31 acquires targeted AV data (AV1) from the file server 23 and stores the targeted AV data (AV1) in the storage 307 of the external apparatus 30.

After that, when subsequent AV data (AV2) is transmitted using the DDB message, the command acquisition unit 221 of the broadcast receiver 20 acquires the subsequent AV data (AV2) and stores this AV data (AV2) in the file server 23 as described above. The subsequent operation is the same as in the case of the AV data (AV1). That is, the file server 23 notifies the command acquisition unit 221 of successful storage of the AV data (AV2). The command acquisition unit 221, which receives this notification, generates Receive & Store Content and transfers Receive & Store Content to the native application 31 being operated in the external apparatus 30, through the external apparatus interface 213.

The native application 31 of the external apparatus 30 accesses the file server 23 of the broadcast receiver 20 through the external apparatus interface 306 according to Receive & Store Content. The native application 31 acquires targeted AV data (AV2) from the file server 23 and stores the targeted AV data (AV2) in the storage 307. In this manner, the AV data (AV1, AV2) stored in the storage 307 of the external apparatus 30 is reproduced using an application such as an AV player capable of processing the AV data (AV1, AV2) at an arbitrary timing specified by the user.

Reset Receive & Store Content is broadcasted using the event message from the broadcast station 10. When the command acquisition unit 221 of the broadcast receiver 20 acquires it, the content data stand-by operation mode is terminated and the operation state before Set Receive & Store Content is acquired, for example, the stand-by operation mode for the command such as Receive & Store Content transmitted using the event message is restored.

Further, in the above-mentioned operation, until the command of Reset Receive & Store Content is received after the broadcast receiver 20 receives the command of Set Receive & Store Content, the resident functional unit 22 of the broadcast receiver 20 is operated on the content data stand-by operation mode as described above. With this, irrespective of the number of times the AV data such as the music data and the image (moving image) data transmitted to the external apparatus 30 is switched, a total of two commands including Set Receive & Launch App and Reset Receive & Launch App are only necessary as the commands that should be transmitted using the event message from the broadcast station 10. Therefore, the running cost of the command transmission using the event message at the broadcast station 10 is reduced.

### (Operation Using Send Message)

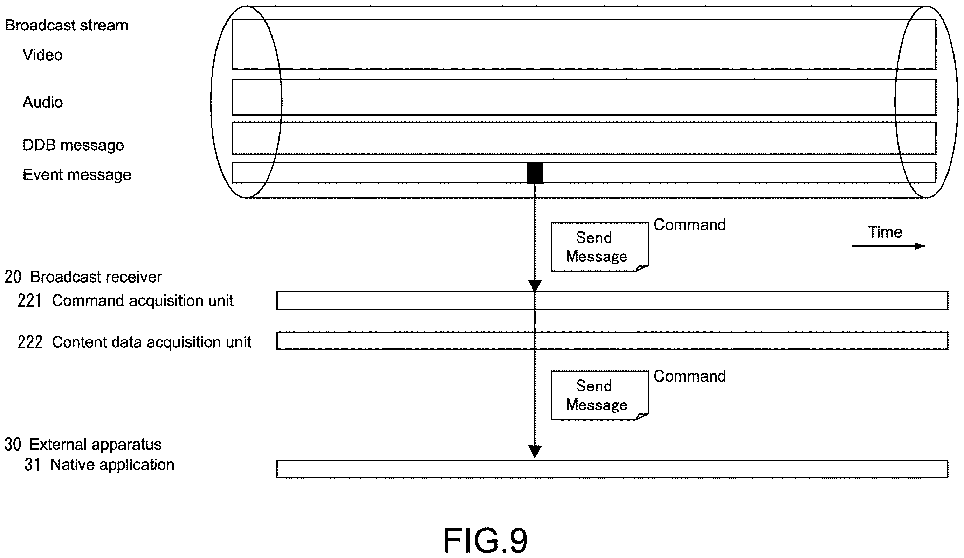

Fig. 9 is a diagram explaining an operation using Send Message (fourth command).

This operation is an operation to transfer Send Message transmitted using the event message from the broadcast station 10, from the broadcast receiver 20 to the external apparatus 30. Send Message is a command in which a message body in text form is stored as an argument.

Next, this operation using Send Message will be described.

First, Send Message is transmitted using the event message from the broadcast station 10. When the command acquisition unit 221 of the broadcast receiver 20 receives this Send Message, the command acquisition unit 221 transfers this Send Message to the native application 31 of the external apparatus 30 through the external apparatus interface 213.

When the native application 31 of the external apparatus 30 receives Send Message transferred from the command acquisition unit 221 of the broadcast receiver 20, a particular operation, for example, presentation of the message body is performed according to this Send Message.

### (Operation Using Launch App)

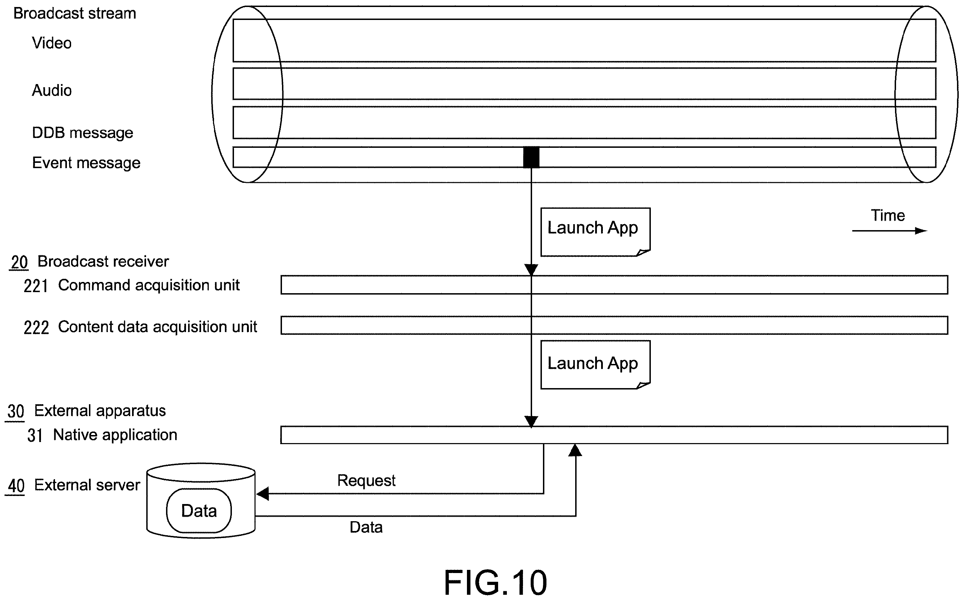

Fig. 10 is a diagram explaining an operation using Launch App (fifth command).

This operation is an operation to transfer LaunchApp broadcasted using the event message from the broadcast station 10, from the broadcast receiver 20 to the external apparatus 30. A URL (Uniform Resource Locator) indicating an access destination of Data is added to Launch App as an argument.

Next, an operation using this Launch App will be described.

Launch App is transmitted from the broadcast station 10 to the event message. When the command acquisition unit 221 of the broadcast receiver 20 acquires this Launch App, the command acquisition unit 221 transfers this Launch App to the native application 31 of the external apparatus 30 through the external apparatus interface 213.

When the native application 31 of the external apparatus 30 acquires Launch App transferred from the command acquisition unit 221 of the broadcast receiver 20, the native application 31 accesses the external server 40 through the communication interface 305 on the basis of the URL of this Launch App stored as the argument and downloads targeted Data.

### [Content Descriptor]

Next, a content descriptor stored in DII (DownloadInfoIndication) of the data carousel and transmitted will be described as information necessary for transmitting the content data such as the application data, the AV data, and the message transmitted using the data carousel from the broadcast station 10, from the broadcast receiver 20 to the external apparatus 30.

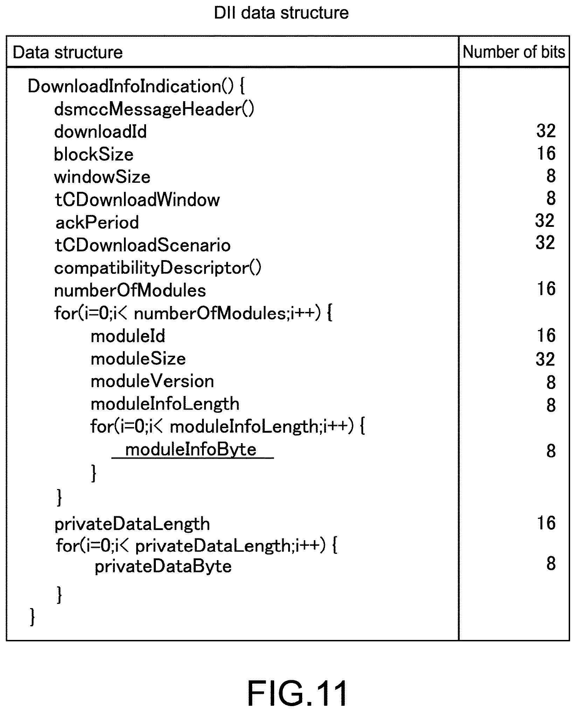

Fig. 11 is a diagram showing a data structure of the DII.

This data structure of the DII is an extract from "Data Coding and Transmission Specification for Digital Broadcasting, Standard, ARIB STD-B24, Version 5.1." The meanings of the descriptors are described in the standards above.

In this data structure of the DII, the above-mentioned content descriptor can be stored in moduleInfoByte as information relating to a module that is a data division unit.

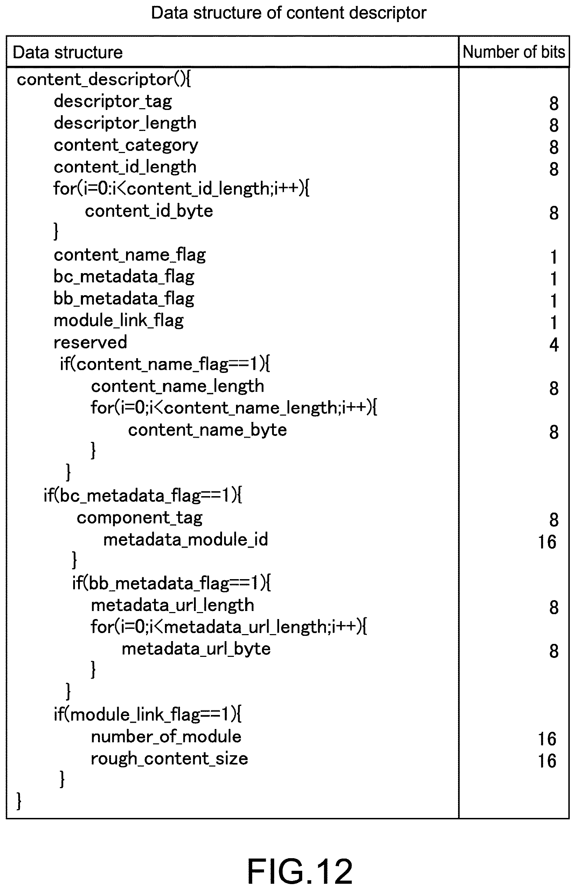

Fig. 12 is a diagram showing a data structure of the content descriptor.

Descriptor_tag is 8-bit data indicating a descriptor type and a tag value indicating the content descriptor is described here.

Descriptor_length is 8-bit data indicating the length (size) of the content descriptor. This data indicates the number of subsequent bytes as the length of the content descriptor.

Content_category is 8-bit data indicating the category of the content data. The category includes application, music, image (moving image), game, message, and the like.

Content_id_length is 8-bit data indicating the length (size) of the content ID.

Content_id_byte is 8-bit data indicating a content ID. The content ID having a length within a range of from 0 to the length indicated by content_id_length can be described in content_id_byte.

Content_name_flag is a flag set if the content has a name.

Bc_metadata_flag is a flag set if relevant data of the content data is transmitted using the data carousel.

Bb_metadata_flag is a flag set if the relevant data of the content data is available from the external server 40.

Module_link_flag is a flag set if the content data is transmitted in a plurality of modules.

Reserved is 4 bits reserved for the flag.

Content_name_length and content_name_byte are described if content_name_flag is set.

Content_name_length is 8-bit data indicating the length of the name of the content. Content_name_byte is 8-bit data indicating the name of the content. In content_name_byte, the name having a length within a range of from 0 to content_name_length can be described.

Component_tag and metadata_module_id are described if bc_metadata_flag is set. Component_tag is data for specifying a component stream in which the carousel is transmitted. Metadata_module_id is a module ID of a module in which the relevant data of the content data is stored. In this manner, the relevant data is determined with a combination of component_tag and metadata_module_id.

Metadata_url_length and metadata_url_byte are described if bb_metadata_flag is set. Metadata_url_length is data indicating the length of a URL at which the relevant data of the content data is stored. Metadata_url_byte is data of that URL. Regarding this metadata_url_byte, for addressing the URL having a length within a range of from 0 to the length indicated by metadata_url_length, a single URL can be described using a plurality of sets of 8-bit metadata_url_bytes.

Number_of_module and rough_content_size are described if module_link_flag is set. Number_of_module is data indicating the number of modules if the content data is transmitted in the plurality of modules. Rough_content_size is data indicating the size of the content data.

The command acquisition unit 221 of the broadcast receiver 20 receives, on the basis of information stored in a received DII message, data transmitted in each module using a DDB (Download Data Block) message of the data carousel. At this time, if the above-mentioned content descriptor is stored in moduleInfoByte of the DII message, the command acquisition unit 221 reads this content descriptor, recognizes what content data is transmitted in which module of which data carousel, and receives the content data. At this time, if the category of the content data is the application, the AV data, or the like, preparation for storing the content data in the file server 23 of the broadcast receiver 20 on the basis of rough_content_size described in the content descriptor is carried out.

### [Other Methods of Describing Content Descriptor]

In the data structure of the DII, a descriptor (InfoDescriptor) of information relating to a module that is a data division unit can be stored in moduleInfoByte. Here, InfoDescriptor is a data structure prepared in the standard for storing the information relating to the module.

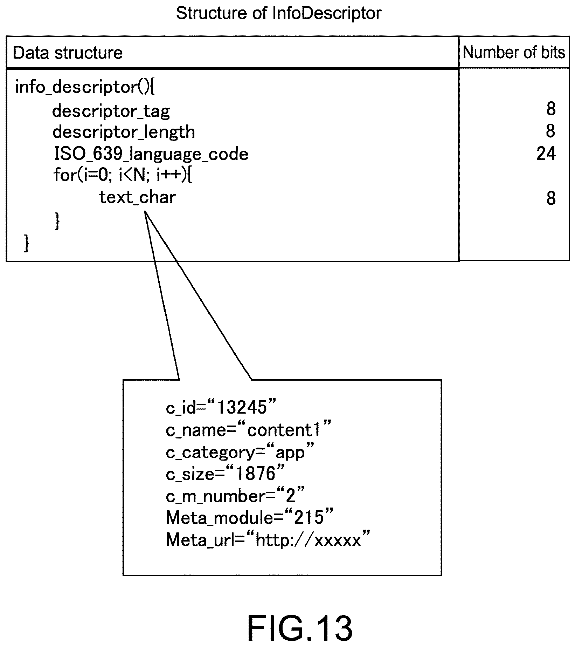

Fig. 13 is a diagram showing the structure of InfoDescriptor.

Here, a plurality of 8-bit character string information items relating to a file transmitted as a module can be described in text_char with character symbols defined in a data encoding system or an operation. The content descriptor is described in this text_char.

The content descriptor includes the following information items.

C_id is an ID for identifying the content data.

C_name is the name of the content data.

C_category is the category of the content data. "App" means that it is a command. Otherwise, there are AV data and the like as the category.

C_size is the size (kilobyte) of the content data.

C_m_number indicates the number of modules in which the content data is transmitted.

Meta_module is a module ID of data associated with the content data.

Meta url indicates a location in a network in which the data associated with the content data is present.

### [Data Structure of Command]

Next, a data structure of the command will be described.

The command is transmitted using the event message.

The data of the event message is described in a stream descriptor and transmitted in a DSM-CC section format for the stream descriptor.

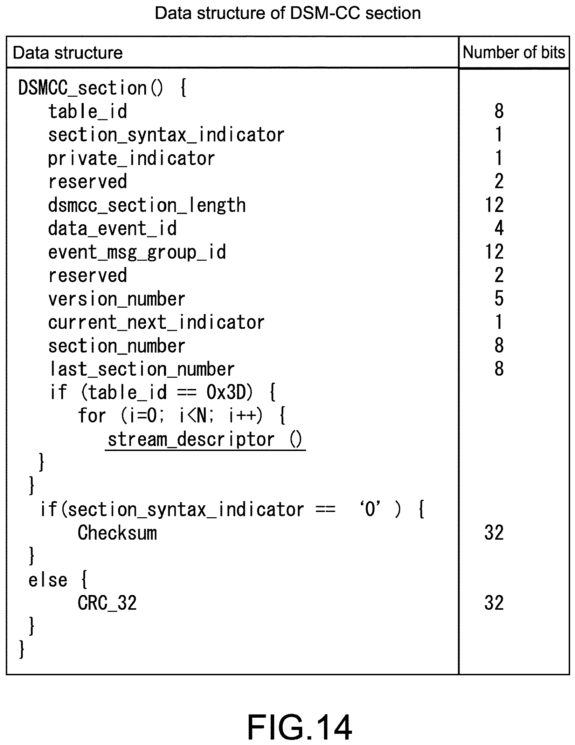

Fig. 14 is a diagram showing a data structure of the DSM-CC section for transmitting the stream descriptor.

This is an extract from "Standard, ARIB STD-B24, Version 5.1." The meanings of the descriptors are described in the above-mentioned standards.

The general-purpose event message descriptor can be stored in stream_descriptor of the DSM-CC section.

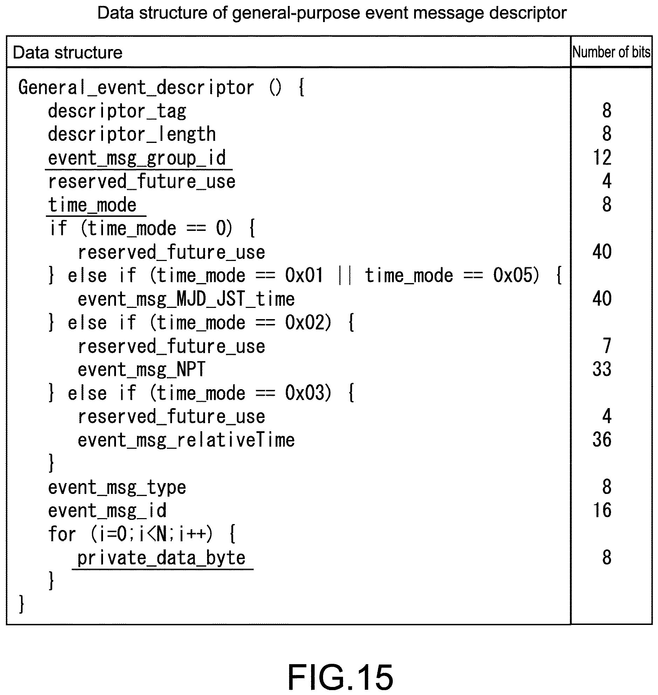

Fig. 15 is a diagram showing a data structure of the general-purpose event message descriptor.

Event_msg_group_id is an identifier for identifying an event message group that should be received by the application. Here, a value indicating that it is an event message group that transmits the command for processing of the content data is described in event_msg_group_id.

Time mode is data indicating a method of specifying a point of time at which the event message is issued. When event_msg_group_id is a value indicating the event message group that stores the command for the processing of the content data, if time_mode is "0," it indicates that the event message is issued (transferred to the external apparatus 30) by the broadcast receiver 20 immediately after it receives the event message. If time_mode is "1," it indicates that the event message is issued by the broadcast receiver 20 in accordance with absolute time represented by the Revised Julian Calendar and the Japan Standard Time. If time_mode is "2," it indicates that the event message is issued by the broadcast receiver 20 in accordance with NPT time data. If time_mode is "3," it indicates that the event message is issued by the broadcast receiver 20 in accordance with a specified relative time (millisecond) from the start of a program.

One or more commands can be described in private_data_byte.

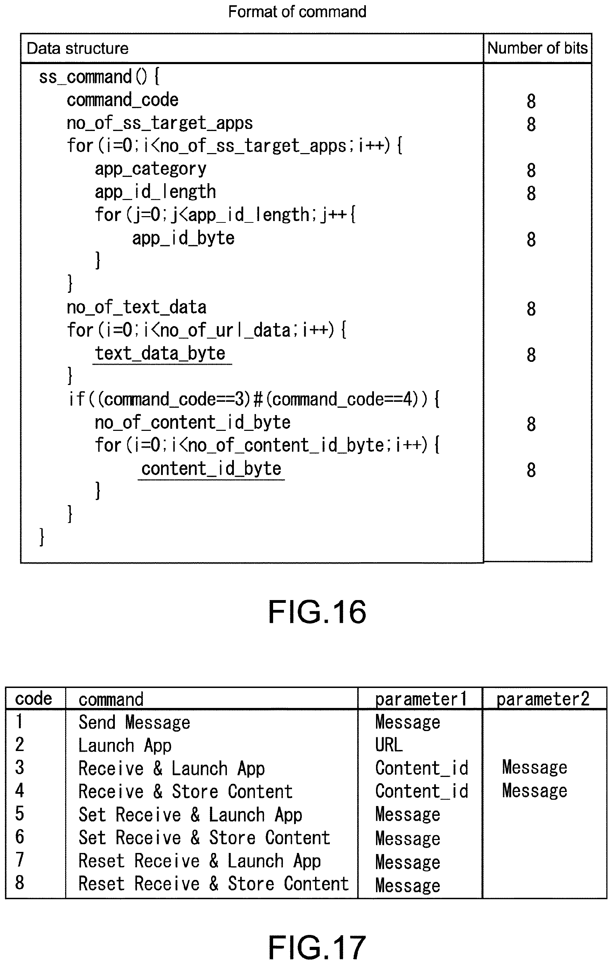

Fig. 16 is a diagram showing a format example of the command stored in private_data_byte.

Command_code is a 8-bit command code. A relationship among the command code, the command, and the argument is shown in Fig. 17.

No_of_ss_target_apps is 8-bit data indicating the number of applications of the external apparatus 30 that transmits the command.

App_category is 8-bit data indicating the category of the application (e.g., OS type).

App_id_length is 8-bit data indicating the length (size) of the application.

App_id_byte is 8-bit data indicating the length (size) of the application. Regarding this app_id_byte, for addressing the data having a length within a range of from 0 to the length indicated by app_id_length, single app_id can be described using a plurality of sets of 8-bit app_id_byte.

No_of_text_data is data indicating the number of text data items such as messages transmitted using Send Message and URLs transmitted using Launch App.

Text_data byte is text data of the message body and the URL themselves. Also with this text_data byte, for addressing the data having a length within a range of from 0 to the length indicated by no_of_text_data, a single message body or URL can be described using a plurality of sets of 8-bit text_databytes e.

The content_id_byte is data for identifying the content data as a processing target of the command. Also regarding this content_id_byte, for addressing the data having a length within a range of from 0 to the length indicated by no_of_content_id_byte, single content_id_ can be described using plurality of sets of 8-bit content_id_byte.

No_of_content_id_byte is 8-bit data indicating a maximum number of content_id_byte.

### [Description Example According to JSON]

JSON (JavaScript (registered trademark) Object Notation) is a data format in which the notation of objects of a Java (registered trademark) Script is applied, which is used for exchanging the data between software modules.

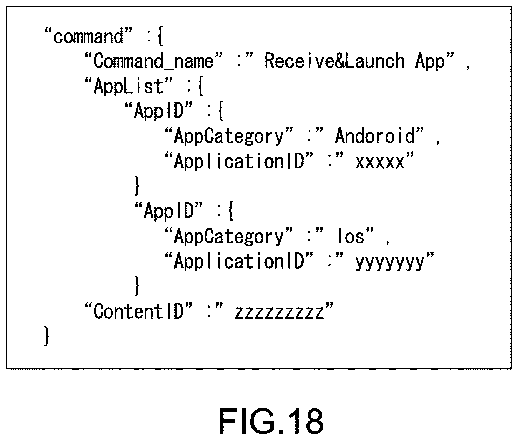

Fig. 18 is a diagram showing a description example of the content description information according to JSON.

In accordance with the JSON, pairs of keys and values with colons (:) dividing them are arranged. Arrays or objects can be used as the values. Therefore, it is possible to nest the arrays and the objects in many layers.

This example is a description example of the command of Receive & Launch App. Here, it is assumed that a plurality of applications are specified in an object with "AppList" as a key, as applications that are command targets of Receive & Launch App. The applications are expressed by the object with "AppID" as the key. In the object with "AppID" as the key, the pair of key and value of the category (AppCategory) is described as information for identifying one of the applications. In addition, in this example, the key and value of the content ID are described as information for specifying content data that is the command target of Receive & Launch App.

### Description of Reference Numerals

- 10: broadcast station
- 11: data broadcasting unit
- 20: broadcast receiver
- 21: data broadcasting reception unit
- 22: resident functional unit
- 23: file server
- 30: external apparatus
- 31: native application
- 32: HTML browser
- 40: external server
- 50: network
- 201: CPU
- 202: RAM
- 203: ROM
- 205: communication interface
- 206: tuner
- 207: demodulator
- 208: TS decoder
- 209: audio decoder
- 210: video decoder
- 211: presentation processor
- 212: system bus
- 213: external apparatus interface
- 214: storage
- 221: command acquisition unit
- 222: content data acquisition unit
- 230: audio output unit
- 240: remote controller
- 301: CPU
- 302: RAM
- 303: ROM
- 305: communication interface
- 306: external apparatus interface
- 307: storage

## Claims

1. A broadcast receiver (20), comprising:
an interface (213) connectable to an information processing apparatus (30);
a storage (23); and
a first controller (22) configured to
- acquire application data transmitted using a download data block, DDB, message,
- store the acquired application data in the storage (23),
- acquire a command transmitted using an event message,
- transfer, if the acquired command is a first command for causing the information processing apparatus connected through the interface to acquire the acquired application data, the first command to the information processing apparatus, and
- send the application data stored in the storage to the information processing apparatus (30) in response to an acquisition request from the connected information processing apparatus.

2. The broadcast receiver (20) according to claim 1, wherein
the first controller (22) is configured to,
- set, if the acquired command is a second command for causing the broadcast receiver to set a content data stand-by operation mode, the content data stand-by operation mode on which the first controller generates the first command and transfers the generated first command to the information processing apparatus (30) every time the first controller acquires the application data transmitted using the DDB message, and
- cancel the set content data stand-by operation mode when the first controller acquires a third command for cancelling the content data stand-by operation mode, the third command being transmitted using the event message while the content data stand-by operation mode is set.

3. The broadcast receiver (20) according to claim 1 or 2, wherein
the first controller (22) is configured to transfer, when the first controller acquires a fourth command for transmitting a message to the information processing apparatus, the fourth command to the information processing apparatus (30), the fourth command being transmitted using the event message.

4. The broadcast receiver (20) according to claim 3, wherein
the first controller (22) is configured to transfer, when the first controller acquires a fifth command for instructing the information processing apparatus (30) to access data on a network, the fifth command to the information processing apparatus, the fifth command being transmitted using the event message.

5. The broadcast receiver (20) according to claim 4, wherein
the first command includes information relating to a method of specifying a point of time at which the first controller (22) transfers the first command to the information processing apparatus (30), and
the first controller is configured to determine a point of time at which the first controller transfers the first command on the basis of the information.

6. A broadcast receiving method, comprising: by a first controller,
acquiring application data transmitted using a download data block, DDB, message; storing the acquired application data;
acquiring a command transmitted using an event message;
transferring, if the acquired command is a first command for causing an information processing apparatus (30) connected through an interface (213) to acquire the acquired application data, the first command to the information processing apparatus; and
sending the application data to the information processing apparatus (30) in response to an acquisition request from the connected information processing apparatus.

7. An information processing apparatus (30), comprising:
an interface (306) connectable to a broadcast receiver (20) configured to acquire application data transmitted using a download data block, DDB, message, acquire a command transmitted using an event message, and transfer, if the acquired command is a first command for causing an information processing apparatus (30) to acquire the acquired application data, the first command to the information processing apparatus; and
a second controller (301) configured to
- acquire the first command from the broadcast receiver, and
- acquire, according to the acquired first command, the application data acquired by the broadcast receiver through the interface by transmitting an acquisition request to the broadcast receiver and receiving the application data stored in the broadcast receiver and sent to the information processing device in response to the acquisition request.

8. The information processing apparatus according to claim 7, wherein
the second controller (301) is configured to activate, according to the first command transferred from the broadcast receiver (20), an application capable of processing the acquired application data.

9. An information processing method, comprising: by a second controller (301),
acquiring, from a broadcast receiver (20) that is connected through an interface, acquires application data transmitted using a download data block, DDB, message, acquires a command transmitted using an event message, and transfers, if the acquired command is a first command for causing an information processing apparatus (30) to acquire the acquired application data, the first command to the information processing apparatus, the first command; and
acquiring, according to the acquired first command, the application data acquired by the broadcast receiver through the interface by transmitting an acquisition request to the broadcast receiver and receiving the application data stored in the broadcast receiver and sent to the information processing device in response to the acquisition request.

## Patentansprüche

1. Rundfunkempfänger (20), umfassend:
eine mit einer Informationsverarbeitungsvorrichtung (30) verbindbare Schnittstelle (213),
einen Speicher (23) und
eine erste Steuerung (22), die konfiguriert ist, um
- mittels einer Download-Datenblock-, DDB-, Nachricht übertragene Anwendungsdaten zu erfassen,
- die erfassten Anwendungsdaten in dem Speicher (23) zu speichern,
- einen mittels einer Ereignisnachricht übertragenen Befehl zu erfassen,
- falls es sich bei dem erfassten Befehl um einen ersten Befehl handelt, um die durch die Schnittstelle verbundene Informationsverarbeitungsvorrichtung zu veranlassen, die erfassten Anwendungsdaten zu erfassen, den ersten Befehl an die Informationsverarbeitungsvorrichtung zu übermitteln und
- in Reaktion auf eine Erfassungsanfrage von der verbundenen Informationsverarbeitungsvorrichtung die in dem Speicher gespeicherten Anwendungsdaten an die Informationsverarbeitungsvorrichtung (30) zu senden.

2. Rundfunkempfänger (20) nach Anspruch 1, wobei die erste Steuerung (22) konfiguriert ist, um
- falls es sich bei dem erfassten Befehl um einen zweiten Befehl handelt, um den Rundfunkempfänger zu veranlassen, einen Inhaltsdaten-Bereitschaftsbetriebsmodus einzustellen, den Inhaltsdaten-Bereitschaftsbetriebsmodus einzustellen, in welchem die erste Steuerung den ersten Befehl erzeugt und den erzeugten ersten Befehl jedes Mal an die Informationsverarbeitungsvorrichtung (30) übermittelt, wenn die erste Steuerung die mittels der DDB-Nachricht übertragenen Anwendungsdaten erfasst, und
- den eingestellten Inhaltsdaten-Bereitschaftsbetriebsmodus aufzuheben, wenn die erste Steuerung einen dritten Befehl zum Aufheben des Inhaltsdaten-Bereitschaftsbetriebsmodus erfasst, wobei der dritte Befehl mittels der Ereignisnachricht übertragen wird, während der Inhaltsdaten-Bereitschaftsbetriebsmodus eingestellt ist.

3. Rundfunkempfänger (20) nach Anspruch 1 oder 2, wobei
die erste Steuerung (22) dafür konfiguriert ist, wenn die erste Steuerung einen vierten Befehl zum Übertragen einer Nachricht an die Informationsverarbeitungsvorrichtung erfasst, den vierten Befehl an die Informationsverarbeitungsvorrichtung (30) zu übermitteln, wobei der vierte Befehl mittels der Ereignisnachricht übertragen wird.

4. Rundfunkempfänger (20) nach Anspruch 3, wobei
die erste Steuerung (22) dafür konfiguriert ist, wenn die erste Steuerung einen fünften Befehl erfasst, um die Informationsverarbeitungsvorrichtung (30) anzuweisen, auf Daten in einem Netzwerk zuzugreifen, den fünften Befehl an die Informationsverarbeitungsvorrichtung zu übermitteln, wobei der fünfte Befehl mittels der Ereignisnachricht übertragen wird.

5. Rundfunkempfänger (20) nach Anspruch 4, wobei
der erste Befehl Informationen beinhaltet, die sich auf ein Verfahren zum Festlegen eines Zeitpunkts beziehen, zu dem die erste Steuerung (22) den ersten Befehl an die Informationsverarbeitungsvorrichtung (30) übermittelt, und
die erste Steuerung dafür konfiguriert ist, auf Grundlage der Informationen einen Zeitpunkt zu bestimmen, zu dem die erste Steuerung den ersten Befehl übermittelt.

6. Rundfunkempfangsverfahren, umfassend: durch eine erste Steuerung erfolgendes Erfassen von mittels einer Download-Datenblock-, DDB-, Nachricht übertragenen Anwendungsdaten,
Speichern der erfassten Anwendungsdaten,
Erfassen eines mittels einer Ereignisnachricht übertragenen Befehls,
falls es sich bei dem erfassten Befehl um einen ersten Befehl handelt, um eine durch eine Schnittstelle (213) verbundene Informationsverarbeitungsvorrichtung (30) zu veranlassen, die erfassten Anwendungsdaten zu erfassen, Übermitteln des ersten Befehls an die Informationsverarbeitungsvorrichtung und
Senden der Anwendungsdaten an die Informationsverarbeitungsvorrichtung (30) in Reaktion auf eine Erfassungsanfrage von der verbundenen Informationsverarbeitungsvorrichtung.

7. Informationsverarbeitungsvorrichtung (30), umfassend:
eine Schnittstelle (306), die mit einem Rundfunkempfänger (20) verbindbar ist, der dafür konfiguriert ist, mittels einer Download-Datenblock, DDB-, Nachricht übertragene Anwendungsdaten zu erfassen, einen mittels einer Ereignisnachricht übertragenen Befehl zu erfassen und, falls es sich bei dem erfassten Befehl um einen ersten Befehl handelt, um eine Informationsverarbeitungsvorrichtung (30) zu veranlassen, die erfassten Anwendungsdaten zu erfassen, den ersten Befehl an die Informationsverarbeitungsvorrichtung zu übermitteln, und
eine zweite Steuerung (301), die konfiguriert ist, um
- den ersten Befehl von dem Rundfunkempfänger zu erfassen und
- gemäß dem erfassten ersten Befehl die durch den Rundfunkempfänger erfassten Anwendungsdaten durch die Schnittstelle zu erfassen durch Übertragen einer Erfassungsanfrage an den Rundfunkempfänger und Empfangen der in dem Rundfunkempfänger gespeicherten und in Reaktion auf die Erfassungsanfrage an die Informationsverarbeitungseinrichtung gesendeten Anwendungsdaten.

8. Informationsverarbeitungsvorrichtung nach Anspruch 7, wobei
die zweite Steuerung (301) dafür konfiguriert ist, gemäß dem von dem Rundfunkempfänger (20) übermittelten ersten Befehl eine Anwendung zu aktivieren, die in der Lage ist, die erfassten Anwendungsdaten zu verarbeiten.

9. Informationsverarbeitungsverfahren, umfassend: von einem Rundfunkempfänger (20), der durch eine Schnittstelle verbunden ist, mittels einer Download-Datenblock-, DDB-, Nachricht übertragene Anwendungsdaten erfasst, einen mittels einer Ereignisnachricht übertragenen Befehl erfasst und, falls es sich bei dem erfassten Befehl um einen ersten Befehl handelt, um eine Informationsverarbeitungsvorrichtung (30) zu veranlassen, die erfassten Anwendungsdaten zu erfassen, den ersten Befehl an die Informationsverarbeitungsvorrichtung übermittelt, durch eine zweite Steuerung (301) erfolgendes Erfassen des ersten Befehls und
gemäß dem erfassten ersten Befehl erfolgendes Erfassen der durch den Rundfunkempfänger erfassten Anwendungsdaten durch die Schnittstelle durch Übertragen einer Erfassungsanfrage an den Rundfunkempfänger und Empfangen der in dem Rundfunkempfänger gespeicherten und in Reaktion auf die Erfassungsanfrage an die Informationsverarbeitungseinrichtung gesendeten Anwendungsdaten.

## Revendications

1. Récepteur de radiodiffusion (20), comprenant :
une interface (213) pouvant être connectée à un appareil de traitement d'informations (30) ;
une mémoire (23) ; et
un premier contrôleur (22) configuré pour
- acquérir des données d'application transmises à l'aide d'un message de téléchargement de blocs de données, DDB,
- mémoriser les données d'acquisition acquises dans la mémoire (23),
- acquérir une commande transmise à l'aide d'un message d'événement,
- transférer, si la commande acquise est une première commande pour amener l'appareil de traitement d'informations connecté par le biais de l'interface à acquérir les données d'application acquises, la première commande à l'appareil de traitement d'informations, et
- envoyer les données d'application mémorisées dans la mémoire à l'appareil de traitement d'informations (30) en réponse à une requête d'acquisition en provenance de l'appareil de traitement d'informations connecté.

2. Récepteur de radiodiffusion (20) selon la revendication 1, dans lequel
le premier contrôleur (22) est configuré pour,
- régler, si la commande acquise est une deuxième commande pour amener le récepteur de radiodiffusion à régler un mode de fonctionnement de veille de données de contenu, le mode de fonctionnement de veille de données de contenu selon lequel le premier contrôleur génère la première commande et transfère la première commande générée à l'appareil de traitement d'informations (30) chaque fois que le premier contrôleur acquiert les données d'application transmises à l'aide du message DDB, et
- annuler le mode de fonctionnement de veille de données de contenu réglé quand le premier contrôleur acquiert une troisième commande pour annuler le mode de fonctionnement de veille de données de contenu, la troisième commande étant transmise à l'aide du message d'événement pendant que le mode de fonctionnement de veille de données de contenu est réglé.

3. Récepteur de radiodiffusion (20) selon la revendication 1 ou 2, dans lequel
le premier contrôleur (22) est configuré pour transférer, quand le premier contrôleur acquiert une quatrième commande pour transmettre un message à l'appareil de traitement d'informations, la quatrième commande à l'appareil de traitement d'informations (30), la quatrième commande étant transmise à l'aide du message d'événement.

4. Récepteur de radiodiffusion (20) selon la revendication 3, dans lequel
le premier contrôleur (22) est configuré pour transférer, quand le premier contrôleur acquiert une cinquième commande pour donner instruction à l'appareil de traitement d'informations (30) d'accéder à des données sur un réseau, la cinquième commande à l'appareil de traitement d'informations, la cinquième commande étant transmise à l'aide du message d'événement.

5. Récepteur de radiodiffusion (20) selon la revendication 4, dans lequel
la première commande comporte des informations relatives à un procédé de spécification d'un instant auquel le premier contrôleur (22) transfère la première commande à l'appareil de traitement d'informations (30), et
le premier contrôleur est configuré pour déterminer un instant auquel le premier contrôleur transfère la première commande en fonction des informations.

6. Procédé de réception de radiodiffusion, comprenant : par un premier contrôleur,
l'acquisition de données d'application transmises à l'aide d'un message de téléchargement de blocs de données, DDB ;
la mémorisation des données d'application acquises ;
l'acquisition d'une commande transmise à l'aide d'un message d'événement ;
le transfert, si la commande acquise est une première commande pour amener un appareil de traitement d'informations (30) connecté par le biais d'une interface (213) à acquérir les données d'applications acquises, de la première commande à l'appareil de traitement d'informations ; et
l'envoi des données d'application à l'appareil de traitement d'informations (30) en réponse à une requête d'acquisition en provenance de l'appareil de traitement d'informations connecté.

7. Appareil de traitement d'informations (30), comprenant :
une interface (306) pouvant être connectée à un récepteur de radiodiffusion (20) configurée pour acquérir des données d'application transmises à l'aide d'un message de téléchargement de bloc de données DDB, acquérir une commande transmise à l'aide d'un message d'événement, et transférer, si la commande acquise est une première commande pour amener un appareil de traitement d'informations (30) à acquérir les données d'application acquises, la première commande à l'appareil de traitement d'informations ; et
un second contrôleur (301) configuré pour
- acquérir la première commande en provenance du récepteur de radiodiffusion, et
- acquérir, conformément à la première commande acquise, les données d'application acquises par le récepteur de radiodiffusion par le biais de l'interface en transmettant une requête d'acquisition au récepteur de radiodiffusion et recevoir les données d'application mémorisées dans le récepteur de radiodiffusion et envoyées au dispositif de traitement d'informations en réponse à la requête d'acquisition.

8. Appareil de traitement d'informations selon la revendication 7, dans lequel
le second contrôleur (301) est configuré pour activer, conformément à la première commande transférée à partir du récepteur de radiodiffusion (20), une application en mesure de traiter les données d'application acquises.

9. Procédé de traitement d'informations, comprenant : par un second contrôleur (301),
l'acquisition, auprès d'un récepteur de radiodiffusion (20) qui est connecté par le biais d'une interface, de données d'application acquises transmises à l'aide d'un message de téléchargement de blocs de données, DDB, acquiert une commande transmise à l'aide d'un message d'événement, et transfère, si la commande acquise est une première commande pour amener un appareil de traitement d'informations (30) à acquérir les données d'application acquises, la première commande à l'appareil de traitement d'informations, la première commande ; et
l'acquisition, conformément à la première commande acquise, des données d'application acquises par le récepteur de radiodiffusion par le biais de l'interface en transmettant une requête d'acquisition au récepteur de radiodiffusion et la réception des données d'application mémorisées dans le récepteur de radiodiffusion et envoyées au dispositif de traitement d'informations en réponse à la requête d'acquisition.
